# EUROPÄISCHE PATENTSCHRIFT

(11) **EP 1 282 668 B1**
(45) Veröffentlichungstag und Bekanntmachung des Hinweises auf die Patenterteilung: **23.03.2005**
(21) Anmeldenummer: 01949315.4
(22) Anmeldetag: 07.05.2001
(51) Int. Cl.: C09D 5/08, C09D 5/02, B05D 7/16

(54) **VERFAHREN ZUR BESCHICHTUNG VON BLECHEN**
METHOD FOR COATING SHEET METALS
PROCEDE POUR REVETIR DES TOLES

(30) Priorität: 08.05.2000 DE 10022352
(43) Veröffentlichungstag der Anmeldung: 12.02.2003
(73) Patentinhaber: Gros, Georg, 77728 Oppenau (DE)
(72) Erfinder: Gros, Georg, 77728 Oppenau (DE)
(74) Vertreter: Hübner, Günter, Dr.
(86) Internationale Anmeldenummer: PCT/EP2001/005084
(87) Internationale Veröffentlichungsnummer: WO 2001/085853

(56) Entgegenhaltungen:
- EP-A- 0 012 339
- EP-A- 0 591 091
- EP-A- 1 118 627
- DE-A- 19 856 990
- DE-A- 19 934 763

## Beschreibung

Die vorliegende Erfindung betrifft ein neues Verfahren zur Beschichtung von Blechen, insbesondere von elektrolytisch- oder feuerverzinkten Blechen, wie z.B. Coils (Band), mit einem chromatfreien, organischen, UV-härtenden Korrosionsschutzüberzug und zur Aushärtung durch Bestrahlung mit UV-Licht.

Wegen der hohen Anforderung an den Korrosionsschutz werden in der Bau-, Hausgeräte- und Automobilindustrie in steigendem Umfang metallisch vorveredelte, insbesondere schmelztauchveredelte Feinbleche eingesetzt. Neben den bewährten feuerverzinkten Blechen werden in neuerer Zeit auch Überzüge mit Zink-Aluminiumlegierungen und elektrolytisch verzinkte Bleche eingesetzt. Auf ungeschützten Zink oder Zink-Aluminiumüberzügen bildet sich bei Anwesenheit von Wasser und Luftsauerstoff rasch eine relativ lockere voluminöse Schicht aus Zinkhydroxid (Weißrost), die bei größeren Anteilen von Aluminium eine graue bis schwarze Färbung aufweist (Schwarzrost), welche nur noch eine geringe Schutzwirkung besitzt.

Um die Zinkoberfläche gegen den Angriff von Wasser und Luftsauerstoff zu passivieren, hat es sich deshalb schon seit langen bewährt, eine dünne Chromatschicht aufzubringen, indem man eine dünne Schicht von Chromtrioxid in Wasser, gegebenenfalls in Gegenwart von Komplexen von Zirkon- oder Siliziumfluorwasserstoffsäuren, aufbringt und eintrocknet, wodurch sich oberflächlich eine dünne Schicht von Zinkchromat, in die zusätzlich Zirkon- und Fluoridionen eingelagert sind, bildet und die unterliegende Schicht von reinem Zink schützt.

Eine weitere Verbesserung des Korrosionsschutzes kann dadurch erreicht werden, daß auf diese Chrompassivierungsschicht zusätzlich noch ein Schutzfilm, beispielsweise auf Basis von Polyacrylaten aufgebracht wird. Es ist auch beschrieben, anstelle von Chromat direkt einen Polyacrylatfilm aufzubringen, jedoch ist die Passivierungswirkung weniger gut als kombinierte Anwendung (Vergleiche B. Schuhmacher et al., Bänder Bleche Rohre Vol. 9 (1997) Seite 24 bis 28).

Nachteilig an diesen Verfahren ist es einerseits, daß Chromverbindungen giftig sind und ihre Anwendung und Verarbeitung daher aus Umweltschutzgründen vermieden werden sollte und andererseits der Auftrag von polymeren Schutzfilmen, insbesondere Acrylatlacken, selbst in den verwendeten dünnen Schichten von wenigen µm, ein Trocknen oder Einbrennen bei Temperaturen von bis zu 150 °C in einem unmittelbar hinter dem zum Auftragen der Versiegelung dienenden Coater erfordern, wobei der Ofen bei den heutigen Produktionsgeschwindigkeiten solcher Coils eine erhebliche Länge haben muß, um eine ausreichend gleichmäßige Trocknung und Einbrennung des Lacks zu ermöglichen. Entstehende Lösemitteldämpfe bilden einen zusätzlichen Nachteil dieses Verfahrens. Eine Verarbeitung von bei Temperaturen von ungefähr 120 °C thermisch selbst vernetzenden und härtenden Blechen (Bake-Hardening) nach diesem Verfahren ist nicht möglich, da die Einbrenntemperaturen des Lacks höher liegen als die Vernetzungstemperatur und somit solche Bleche vorzeitig erhärten würden.

Aus der DE 197 51 153 A1 ist eine chromatfreie Coilbeschichtung von Stahlblechen bekannt, bei der Titan-, Mangan- und/oder Zirkoniumsalze mit olefinisch ungesättigten polymerisierbaren Carbonsäuren und ggf. weiteren olefinischen Comonomeren in einer 0,5 bis 10 µm dicken Schicht aufgetragen und durch UV-Licht in 3 Minuten ausgehärtet wird. Für den Korrosionsschutz entscheidend ist ein hoher Anteil der Metallsalze, da salzfreie Beschichtungen korrodieren. Die lange Aushärtungszeit macht solche Beschichtungen für einen kontinuierlichen Einsatz bei der Coilherstellung ungeeignet. Ein Gehalt an Lösungsmittel und/oder leicht verdampfenden Comonomeren stellt wegen der Brandgefahr ein weiteres Produktionsrisiko dar.

Aus der DE 25 21 986 sind UV-strahlungshärtende Überzugszusammensetzungen aus Addukten aus Acrylsäure und einem Epoxyharz bekannt, die noch Reaktions-Acrylatmonomer enthalten und als Lackschichten von 1 bis 20 mg je 6,4 cm², d.h. ca. 1,5 bis 30 µm Schichtdicke, auf Metall, Papier, Leder etc. aufgebracht werden können. Die Aushärtung erfolgt durch UV-Bestrahlung über 1 bis 30 Sekunden und 6 Minuten Nachhärtung bei 165 °C. Für Coilbeschichtungen sind solche Beschichtungen nicht geeignet, da sie wegen ihrer Dicke nicht verformbar sind und die hohen Einbrenntemperaturen zu einer vorzeitigen Härtung der Bleche führen.

Aus der EP 0 257 812 A2 ist ferner bekannt, einen Schutzüberzug für Metalle, Kunststoff oder Holz aus einer Mischung eines Nitril/Acrylat-Copolymers mit einem multifunktionalen Monomer, in einem reaktiven Verdünner aus einem olefinisch ungesättigten polymerisierten Monomer wie Acrylester durch UV-Härtung herzustellen. Das System ist somit frei von nicht reagierenden Lösungsmitteln. Die Schichtdicke beträgt 2,5 bis 76 µm, die Aushärtung mit UV-Licht erfolgt bei Raumtemperatur, bis der Überzug nicht mehr klebrig ist. Dies erfordert erhebliche Zeit, zudem sind diese Mischungen aufgrund des Monomeranteils brennbar.

EP-A1-0 012 339 beschreibt strahlungshärtbare wässrige Bindemitteldispersionen, die im wesentlichen aus Wasser, dispergierten Präpolymeren, Dispergierhilfsmittel und Photoinitiator bestehen.

EP-A1-0 591 091 lehrt ein Herstellverfahren für Beschichtungen, die im nassen Zustand reibungsvermindemde Eigenschaften aufweisen und Bindemittel, hydrophiles Polymer, Lösemittel und ggf. eine die Osmose verstärkende Verbindung enthalten.

DE-A1-198 56 990 betrifft wäßrige Elektrotauchlacke auf Basis einer Dispersion mit anionisch modifiziertem Polyurethanacrylat, Reaktivverdünner, Photoinitiator sowie ggf. Additiven, Füllstoffen bzw. Pigmenten.

DE-A1-199 34 763 legt ebenfalls wäßrige Elektrotauchlacke offen, die auf Basis einer Dispersion mit anionisch modifiziertem Polyurethan(meth)acrylat, Reaktivverdünner sowie ggf. Photoinitiatoren, thermisch aktivierbaren Radikalinitiatoren, Additiven, Füllstoffen bzw. Pigmenten gestaltet sind.

EP-A1-1 118 627 beschreibt witterungsstabile, strahlungshärtbare Polyurethane auf Basis von Polyisocyanaten, cycloaliphatischen Diolen bzw. Diaminen, sowie von Verbindungen, die einerseits mindestens eine gegenüber Isocyanat reaktive Gruppe und mindestens eine radikalisch polymerisierbare ungesättigte Gruppe bzw. andererseits mindestens eine gegenüber Isocyanat reaktive Gruppe und mindestens eine dispergieraktive Gruppe aufweisen.

Es stellte sich daher die Aufgabe, ein Verfahren zur Beschichtung von Blechen, insbesondere von verzinkten Blechen, zu finden, mit dem ein dünner Korrosionsschutz-Film schnell und ohne Anwendung hoher Temperaturen aufgebracht und gehärtet werden kann, und das vorzugsweise auch ohne Vorbehandlung mit Chrom eine ausreichende Korrosionsbeständigkeit ermöglicht.

Die Lösung dieser Aufgabe wird durch die Merkmale des Hauptanspruchs ermöglicht und durch die der Unteransprüche gefördert.

Der Begriff "Blech" im Sinne dieser Anmeldung umfaßt Tafelblech, Coil ("Band"), Bandabschnitte und Stanzteile. Das Blech ist vorzugsweise gut umformbar.

Grundsätzlich können sehr viele unterschiedliche metallische Oberflächen von Blechen als Substrat zur Beschichtung verwendet werden. Hierzu gehören insbesondere Aluminium, aluminiumhaltige Legierungen, Magnesiumlegierungen, Stähle, Edelstähle, Titan, Titanlegierungen, Reinzink, zinkhaltige Legierungen und verzinkte Oberflächen, vor allem feuer- bzw. elektrolytisch verzinkte Oberflächen.

Die erfindungsgemäß verwendeten, durch UV-Licht härtbaren Überzugsmittel sind bekannt. Neben Lacksystemen auf Lösemittelbasis, wässrigen Systemen oder Pulvereinbrennlacken, die in der Industrielackierung hauptsächlich verarbeitet werden, bilden solche strahlungshärtenden Harze mit lediglich 4 % Marktanteil jedoch eher exotische Produkte. Strahlungshärtbare wässrige Lacksysteme werden vor allem im Holzlackbereich eingesetzt, gefolgt von Überdrucklacken und letztlich Druckfarben. Eine andere Anwendung ist die Strahlungshärtung einer festen Schicht über eine Maske, so daß die unbelichteten Flächen ausgewaschen werden können und sich aus den gehärteten Stellen beispielsweise ein Druckrelief bilden läßt. Andere Anwendungen sind Kunststofflackierungen von PVC-Fußböden, Skiern und die Verwendung von viskosen Polymer-/Reaktionsverdünnermischungen in lichthärtbaren Dentalmassen.

Daß sich mit wässrigen Suspensionen UV-härtbarer Massen dünne, auf Metalloberflächen festhaftende und auch bei thermischer und Biegebeanspruchung nicht abplatzende Überzüge bilden lassen, war bisher nicht bekannt.

Gegenüber den bisher bekannten Lacküberzügen haben die erfindungsgemäßen wässrigen UV-härtbaren Massen den großen Vorteil, daß sie schnell auch bei vergleichsweise niedrigen Temperaturen, vorzugsweise Temperaturen im Bereich von 20 bis 40 °C, aushärten, keine organischen Lösemittel freigesetzt werden müssen und sich dichte, feste, einen guten Korrosionsschutz bildende Beschichtungen bilden.

Überraschenderweise läßt sich das als viskositätsregulierendes Mittel zugesetzte Wasser aus den für den Korrosionsschutz von Coils notwendigen dünnen Schichten, vorzugsweise Schichten im Bereich von 1 bis 2 µm Trockenfilmdicke, bei Temperaturen im Bereich von 50 bis 100 °C schnell austreiben, insbesondere in einem Zeitraum von 6 bis 2 Sekunden, so daß eine kontinuierliche Verarbeitung möglich ist.

Ein weiterer Vorteil solcher UV-härtenden Beschichtungssysteme besteht darin, daß sie nur oder fast nur unter UV-Licht aushärten und daher gut gelagert werden können und Verunreinigungen der Maschinen und Reste des Beschichtungsmittels, die nicht dem UV-Licht ausgesetzt waren, in den Auftragsystemen leicht mit Wasser abgewischt bzw. abgewaschen werden können, während bei den üblichen lösemittelhaltigen Lacken angetrocknete Reste festhaftende Filme bilden, die nur mit Schwierigkeiten wieder entfernt werden können. Ein weiterer Vorteil der erfindungsgemäßen Beschichtungsmittel liegt darin, daß sie einen vergleichsweise geringen Gleitreibungskoeffizienten, vorzugsweise im Bereich von 0,10 bis 0,14, aufweisen, welcher eine gute Umformbarkeit der Bleche beispielsweise bei Walzprofilen, beim Tiefziehen oder Abkanten ermöglicht, wobei solches Grenzzieh-Verhalten beispielsweise mit dem üblichen Näpfchenziehtest ermittelt wird und als das Verhältnis aus dem Durchmesser der größten ohne Falten durchzuziehenden Blechronde zum Stempeldurchmesser definiert ist. Für verzinkte Bleche wird mit einer erfindungsgemäßen Versiegelung in der Dicke von circa 1 µm beispielsweise ein Gleitreibungskoeffizient von 0,1 erreicht. Erfindungsgemäße Beschichtungen lassen sich normalerweise gut verkleben oder mit zusätzlichen Farblackierungen verbinden, so daß sie gleichzeitig als Primer wirken.

Strahlungshärtbare Überzugsmittel werden zusammengesetzt aus einem wasserverdünnbaren, strahlungshärtbaren Basisharz, gegebenenfalls Elastifizierungsharze, sowie einem oder mehreren Photoinitiatoren. Zusätzlich lassen sich noch Additive, wie den Kontakt zum Metall verbessernde bzw. die Polymerisation steuernde Mittel, beispielsweise Phosphorsäureacrylate, acryl-funktionelle Polydimethylsiloxane, Aluminiumphosphat oder Aminverbindungen mit Vorteil hinzufügen.

Lösungsmittelfreie strahlungshärtbare Überzugsmittel nach dem Stand der Technik benötigen, um verarbeitbar zu sein, erhebliche Mengen der "Reaktiwerdünner", welche gleichzeitig als Lösemittel und polymerisierende Komponente wirken. Es ist dabei bekannt, daß diese Reaktiwerdünner mit zunehmendem Molekulargewicht an Viskosität zunehmen, andererseits bei niederem Molekulargewicht - insbesondere im Bereich von 100 bis 250 g/mol (20 sec./ISO 2431/5) - zwar niedrigviskos sind und somit Lösemitteleigenschaften, aber auch einen entsprechend höheren Dampfdruck aufweisen, so daß sie während der Verarbeitung in die Umgebung emittiert werden bzw. - soweit sie nicht vollständig in die Lackmatrix eingebunden werden - nachträglich noch aus dem ausgehärteten Lack emittiert werden können.

Erfindungsgemäß werden daher wässrige strahlungshärtbare Lacke verwendet, welche als wässrige Dispersionen oder Emulsionen verarbeitet werden können, so daß sie auf die Zusätze niedrigmolekularer Reaktivverdünner verzichten können. Als Bindemittel können solche Produkte Basisharze, als wässrige Dispersionen oder Emulsionen aus Polyacrylat, ungesättigte Acrylesterharze und/oder Urethanacrylharze hergestellt, sowie Emulgatoren, Tenside und/oder Konservierunsstoffe und Wasser enthalten. Diese Produkte bilden beim Abtrocknen Filme, die durch Strahlung nachgehärtet werden. Elastifizierungsharze und Photoinitiatoren sowie sonstige Additive entsprechen den bei wasserfreien Mischungen bekannten Produkten, wobei als Additive zusätzlich noch Emulgierungsmittel für die Harze, Schutzkolloide etc. in geringen Mengen zugefügt werden können.

Die Zusammensetzung der erfindungsgemäßen UV-Lacke kann in relativ weiten Grenzen variieren, wobei übliche Rezepturen beispielsweise
Bindemittel 25 bis 80 Gew.-%, vorzugsweise 30 bis 50 Gew.-%,
Photoinitiatoren 1 bis 8 Gew.-%, vorzugsweise 2 bis 6 Gew.-%,
Additive 0 bis 5 Gew.-%, vorzugsweise 1 bis 3 Gew.-% und
Wasser 70 bis 20 Gew.-%, vorzugsweise 60 bis 40 Gew.-% enthalten.

Eine weitere Verdünnung der Systeme mit Wasser ist jedoch möglich, um damit besonders dünne Trockenfilmschichten zu erreichen. Dann enthalten die Mischungen insbesondere:
Bindemittel 5 bis 40 Gew.-%, vorzugsweise 10 bis 30 Gew.-%,
Photoinitiatoren 0,1 bis 6 Gew.-%, vorzugsweise 0,5 bis 5 Gew.-%,
Additive 0 bis 4 Gew.-%, vorzugsweise 0,3 bis 2,5 Gew.-% und
Wasser 90 bis 60 Gew.-%, vorzugsweise 80 bis 65 Gew.-%.

Insbesondere Pigmente können darüber hinaus mit einem Gehalt im Bereich von 0,1 bis 60 Gew.-%, insbesondere mehr als 5 oder sogar mehr als 8 Gew.-%, vorzugsweise weniger als 32 oder sogar weniger als 25 Gew.-% enthalten sein. Der Gehalt an Pigment wird dabei über die Summe aller anderen Bestandteile einer Mischung einschließlich der Lösemittel = 100 Gew.-% hinaus berechnet, so daß eine Mischung mit z.B. 12 Gew.-% Pigment(e) insgesamt 112 Gew.-% aufweist.

Da die auf Acrylatbasis aufgebauten strahlungsgehärteten Filme durch die an sich gewünschte Härte in gewissen Mischungen eventuell zu spröde sind und daher zum Abplatzen von dem Untergrund neigen können, ist es vorteilhaft, in diesen Fällen ein elastifizierendes Bindemittel zuzufügen, wozu sich die Zumischung ungesättigter aliphatischer Urethanacrylat-Präpolymerisate oder Polyurethandispersionen bewährt hat. Diese Stoffe werden ggf. in Mengen von bis zu 15 Gew.-%, vorzugsweise von 1 bis 10 Gew.-%, zugefügt.

Als Additive können z.B. Antioxidantien, Biozide, Dispergierungsmittel, Entschäumer, Füllstoffe, Haftvermittler wie z.B. Silane, Netzmittel, Pigmente, Wachse oder/und Stabilisatoren zugesetzt werden bzw. bereits im zuzumischenden Produkt enthalten sein. Dimethyisiloxane können hierbei als Gleit- und Benetzungsadditiv dienen, Polyethylenwachse als Umformhilfe, Aluminiumphosphate, Erdalkalioxide und Morpholin-Derivate als Korrosionsschutzadditiv.

Als Pigmente können u.a. anorganische oder/und organische Korrosionsinhibitoren, elektrisch leitfähige Polymere, elektrisch leitfähige Partikel, wie z.B. Oxide, Phosphate, Phosphide insbesondere von Aluminium oder/und Eisen bzw. Graphit/Ruß, anorganische Pigmente wie z.B. Carbonate, Oxide, Phosphate, Phosphide, Silicate, Graphit-Glimmer, insbesondere in Form von Schicht- bzw. Nanopartikeln, vorteilhaft zugesetzt werden.

Bevorzugte Mischungen aus Basisharzen, Elastifizierungsharzen, Photoinitiatoren und Additiven können z.B. sein:
Polyesteracrylat - Urethanacrylat - Phenylketon - Dimethylsiloxan oder
Polyester- und Styrolacrylat - Urethanacrylat - Phenylketon - Dimethylsiloxan oder
Polyester- und Reinacrylat - Urethanacrylat - Phenylketon - Dimethylsiloxan oder
Polyester-, Styrol- und Reinacrylat - Urethanacrylat - Phenylketon - Dimethylsiloxan oder
Polyesteracrylat - Urethanacrylat - Phenylketon - Dimethylsiloxan und Phosphorsäureester.

Die Mischungen liegen als Dispersionen, insbesondere als Emulsionen, vor, die hier auch als Überzugsmittel bezeichnet werden. Das Überzugsmittel dient vorzugsweise als Primer, insbesondere als Gleitprimer.

Vor dem Auftragen des Überzugsmittel auf die metallische Oberfläche des Substrates ist eine homogene Mischung aus den Bestandteilen des Überzugsmittels herzustellen, die ggf. noch mit einer größeren Menge an vollentsalztem Wasser verdünnt und homognisiert wird. Das Homogenisieren kann durch Umrühren erfolgen. Mit der Zugabe dieser Menge kann vorteilhafterweise auch gleichzeitig die Verarbeitungsviskosität eingestellt werden. Während der Verarbeitung kann es erforderlich sein, bis zu 10 Vol.-% vollentsalztes Wasser zu ergänzen und zu homogenisieren.

Die Viskosität des Überzugsmittels beim Auftrag durch Walzen liegt vorzugsweise im Bereich von 20 bis 40 sec./ISO 2431/5, beim Auftrag durch Spritzen vorzugsweise im Bereich von 12 bis 20 sec./ISO 2431/5.

Der Festkörperanteil des Überzugsmittels beim Auftrag durch Walzen liegt vorzugsweise im Bereich von 20 bis 35 %, beim Auftrag durch Spritzen vorzugsweise im Bereich von 15 bis 25 %, wobei der Gehalt an Pigmenten noch nicht berücksichtigt ist. Die einzelnen zugesetzten Pigmente können jeweils eine mittlere Partikelgröße im Bereich von 0,001 bis 10 µm aufweisen, vorzugsweise im Bereich von 0,01 bis 4 µm.

Die Dichte des Überzugsmittels beim Auftrag durch Walzen liegt vorzugsweise im Bereich von 1,1 bis 1,2 g/cm³, beim Auftrag durch Spritzen liegt vorzugsweise im Bereich von 1,05 bis 1,1 g/cm³, wobei der Gehalt an Pigmenten noch nicht berücksichtigt ist.

Der pH-Wert des Überzugsmittels beim Auftrag durch Walzen oder/und durch Spritzen liegt vorzugsweise im Bereich von 1 bis 3.

Die Mischungen werden vorteilhafterweise so ausgewählt, daß eine ausreichende oder vollständige Vernetzung bzw. Aushärtung allein durch aktinische Strahlung erreicht werden kann, ohne daß eine zusätzliche thermische Vernetzung bzw. Aushärtung erforderlich ist.

Das Überzugsmittel kann mit den grundsätzlichen bekannten Verfahren auf der/den metallischen Oberfläche(n) des Substrats aufgetragen werden. Der Auftrag des Überzugsmittels kann an einzelnen Blechen oder an einem Blech in Form eines Bandes (Coils) erfolgen. Besonders vorteilhaft ist ein Aufwalzen z.B. mit einem Rollcoater, ein Aufspritzen und Abquetschen mit einer Walze oder ein Tauchen und Abquetschen mit einer Walze insbesondere im Inline-Verfahren. Mit dem Inline-Verfahren ist ein Überzugsmittelauftrag, insbesondere ein Primerauftrag, in einer Verzinkungslinie, gemeint. Alternativ ist u.a. eine Beschichtung in einer Coil-Coating-Linie (Off-Line) möglich. Vor oder zum Auftragen des Überzugsmittels muß dieses nicht aufgewärmt werden. Vorzugsweise weist das Überzugsmittel beim Auftragen auf die metallische Oberfläche eine Temperatur im Bereich von 18 bis 40 °C, insbesondere von 20 bis 25 °C, auf. Umgekehrt ist es vorteilhaft, wenn das Substrat mit der metallischen, zu beschichtenden Oberfläche beim Auftragen des Überzugsmittels eine Temperatur im Bereich von 18 bis 60 °C, insbesondere von 25 bis 40 °C, aufweist.

Das Überzugsmittel kann mit einer Naßfilmdicke im Bereich von 0,2 bis 100 µm, insbesondere im Bereich von 0,5 bis 75 µm, besonders bevorzugt im Bereich von 1 bis 40 µm, ganz besonders bevorzugt im Bereich von 2 bis 20 µm, aufgebracht werden. Nach dem Trocknen und nach aktinischer Bestrahlung beträgt die Trokkenfilmdicke des erzeugten Korrosionsschutzüberzugs vorzugsweise 0,1 bis 20 µm, besonders bevorzugt 0,3 bis 12 µm, ganz besonders bevorzugt 0,5 bis 8 µm, vor allem 0,8 bis 6 µm. Die Schichtdicke kann beispielsweise gravimetrisch bestimmt werden.

Der Auftrag des Überzugsmittels auf die metallische Oberfläche erfolgt vorzugsweise auf ein frisch mit einer metallischen Schicht beschichteten Oberfläche wie z.B. einer Verzinkungsschicht oder auf eine gereinigte oder/und gebeizte und ggf. zusätzlich aktivierte metallische Oberfläche. Darüber hinaus kann mindestens eine Vorbehandlungsschicht wie z.B. eine Phosphatschicht aufgebracht sein, auf die dann das erfindungsgemäße Überzugsmittel aufgetragen werden kann.

Selbstverständlich muß der wasserhaltige Harzfilm nach dem Auftragen auf mindestens einer der Oberflächen des Blechs zunächst getrocknet werden, bevor eine Vernetzung und Aushärtung durch UV-Bestrahlung erfolgen kann. Die Nachteile des zusätzlichen Trocknungsschritts werden jedoch durch den Verzicht auf monomere Bestandteile und durch die größere Härte und Festigkeit der entstehenden getrockneten Filme wieder ausgeglichen. Im übrigen kann das enthaltene Wasser bei Substrattemperaturen im Bereich von 50 bis 100 °C abgetrocknet werden, so daß die Umwandlungstemperatur von z.B. 120 °C auch bei selbsthärtenden Blechen nicht erreicht wird. Je nach Beschaffenheit der Beschichtungsanlage und der gewählten Temperaturen resultieren unterschiedliche Trockenzeiten. Bei einer Substrattemperatur im Bereich von 60 bis 80 °C können z.B. 2 bis 10 Sekunden, insbesondere 4 bis 8 Sekunden, für die ausreichende Trocknung eingesetzt werden. Eine unzureichende Vortrockung beeinträchtigt die vollständige anschließende UV-Aushärtung. Nach ausreichender Trocknung kann die Vernetzung und Aushärtung durch Bestrahlung mit aktinischer Strahlung erfolgen.

Zur Strahlungshärtung können solche Mischungen bekannterweise direkt mit Elektronenstrahlen, welche die Bildung von Radikalen bewirken, vernetzt werden, wobei Elektronenstrahl-Apparaturen jedoch im Normalfall zu aufwendig sind. Es wird daher zur Härtung eine Belichtung mit UV-Strahlung bevorzugt, die durch preiswerte Quecksilberdampflampen erzeugt wird, wobei allerdings eine Zugabe von Photoinitiatoren zu der Mischung erforderlich ist. Photoinitiatoren, die in einem Wellenlängenbereich von 200 bis 400 nm aktive Radikale bilden, die die Polymerisation auslösen, sind im Stand der Technik bekannt. Eingesetzt werden unter anderem Benzoinether wie Benzoinisopropylether oder Benzildimethylketal, 1-Hydroxycyclohexylphenylketon, 2-Hydroxy-2-methyl-1-phenylpropan-1-on, Benzophenone oder auch 2,4,6-Trimethylbenzoyl-diphenyl-phosphinoxid. Gemeinsam ist diesen Verbindungen, daß sie leicht an Doppelbindungen addierende Benzoyloder Benzylradikale bilden, die die radikalische Polymerisation der Hauptkomponenten starten.

Als UV-Quelle werden üblicherweise heute Hochdruckquecksilberdampflampen verwendet, welche beispielsweise 70 bis 240 W oder zukünftig auch mehr, insbesondere 80 bis 160 W, Leistung pro Zentimeter Lampenlänge aufweisen und vorzugsweise im Bereich von 180 bis 500 nm, besonders bevorzugt im Bereich von 200 bis 400 nm, insbesondere im Bereich von 220 bis 350 nm, d.h. der Hauptabsorption der Photoinitiatoren, eine starke Strahlung abgeben. Je nach Reaktivität der Photoinitiatoren und der Zusammensetzung der zu härtenden Mischung erfolgt eine überwiegende Aushärtung innerhalb weniger Sekunden, teilweise bereits unter einer Sekunde, wobei auch die Beweglichkeit der Moleküle in der Reaktionsmasse eine Rolle spielt, so daß üblicherweise bei Temperaturen von 50 bis 100 °C gearbeitet wird, wodurch sich Umsetzungen bis zu über 96 % der vorhandenen Doppelbindungen ergeben. Die Bestrahlung kann an Luft oder in inerter Gasatmosphäre insbesondere in Stickstoff erfolgen.

Für die UV-Aushärtung kann z.B. mit einer Bandgeschwindigkeit von 30 m pro Minute, mit einem Abstand Substrat - Strahlungsquelle von 8 cm, mit einer quecksilberdotierten Lampe mit einer Leistung von 160 W pro cm Lampenlänge und bei einer Substrattemperatur von 60 °C gearbeitet werden. Bei Verwendung von vier derartigen Lampen kann die Bandgeschwindigkeit auf ca. 120 m pro Minute gesteigert werden.

Das Ablösen des Überzugsmittels bzw. der aushärtenden oder ausgehärteten Korrosionsschutzschicht kann mit einem organischen Lösemittel oder mit einem Lösemittelgemisch erfolgen, vorteilhafterweise spätestens unmittelbar nach der UV-Bestrahlung. Wasser ohne Zusatz eines organischen Lösemittels kann nur vor der UV-Bestrahlung verwendet werden.

Das erfindungsgemäß beschichtete Material kann nun je nach Verwendungszweck sehr gut weiterverarbeitet werden, wie z.B. umgeformt, tiefgezogen, geschnitten, gestanzt, geklebt und/oder beschichtet werden, insbesondere lackiert werden.

Das erfindungsgemäße Beschichtungsverfahren bietet im Vergleich zu alternativen Verfahren des Standes der Technik folgende Vorteile: Die Beschichtungsanlage verschmutzt nur geringfügig und kann leicht gereinigt werden, da das Überzugsmittel bei Raumtemperatur überlicherweise nicht antrocknet und nur mit aktinischer Strahlung aushärtet. Es können bei der kontinuierlichen Fertigung hohe Bandgeschwindigkeiten eingestellt werden, insbesondere Geschwindigkeiten des Bandes im Bereich von 10 bis 200 m pro Minute. Die maximale Substrattemperatur liegt beispielsweise nur bei 80 °C bei der Vernetzung und Aushärtung, was auch Energie und Kosten spart. Es können besonders geringe Gleitreibungskoeffizienten eingestellt werden. Das erfindungsgemäß beschichtete Substrat ist gut umformbar, und auch der Korrsionsschutzüberzug zeigt eine hohe Elastitzität. Der Korrosionsschutzüberzug kann daher hervorragend als Gleitprimer eingesetzt werden.

Der Vorteil des erfindungsgemäßen Gleitprimers ist u.a. der, das ein zusätzliches Umformmittel wie ein Umformöl oder ein Ziehöl nicht mehr benötigt wird, auch wenn es grundsätzlich eingesetzt werden könnte. Falls dennoch ein Öl als Umformmittel eingesetzt werden sollte, ist dieses nach dem Umformen und vor dem weiteren Beschichten zu entfernen.

### Beispiele

In den folgenden Tabellen sind beispielhaft Rezepturen, Verfahrensbedingungen und Ergebnisse für erfindungsgemäße strahlungshärtbare Systeme wiedergegeben, ohne daß dadurch die Erfindung in irgendeiner Weise beschränkt sein soll.

Es wurden gut durchgemischte Mischungen entsprechend Tabelle 1 vorbereitet, die auf Bleche von einer Dicke im Bereich von 0,6 bis 5 mm, vorzugsweise im Bereich von 0,8 bis 1,5 mm, aufgetragen wurden. Die speziellen Verarbeitungsbedingungen und die Ergebnisse der anschließenden Laboruntersuchungen sind in Tabelle 2 eingetragen.

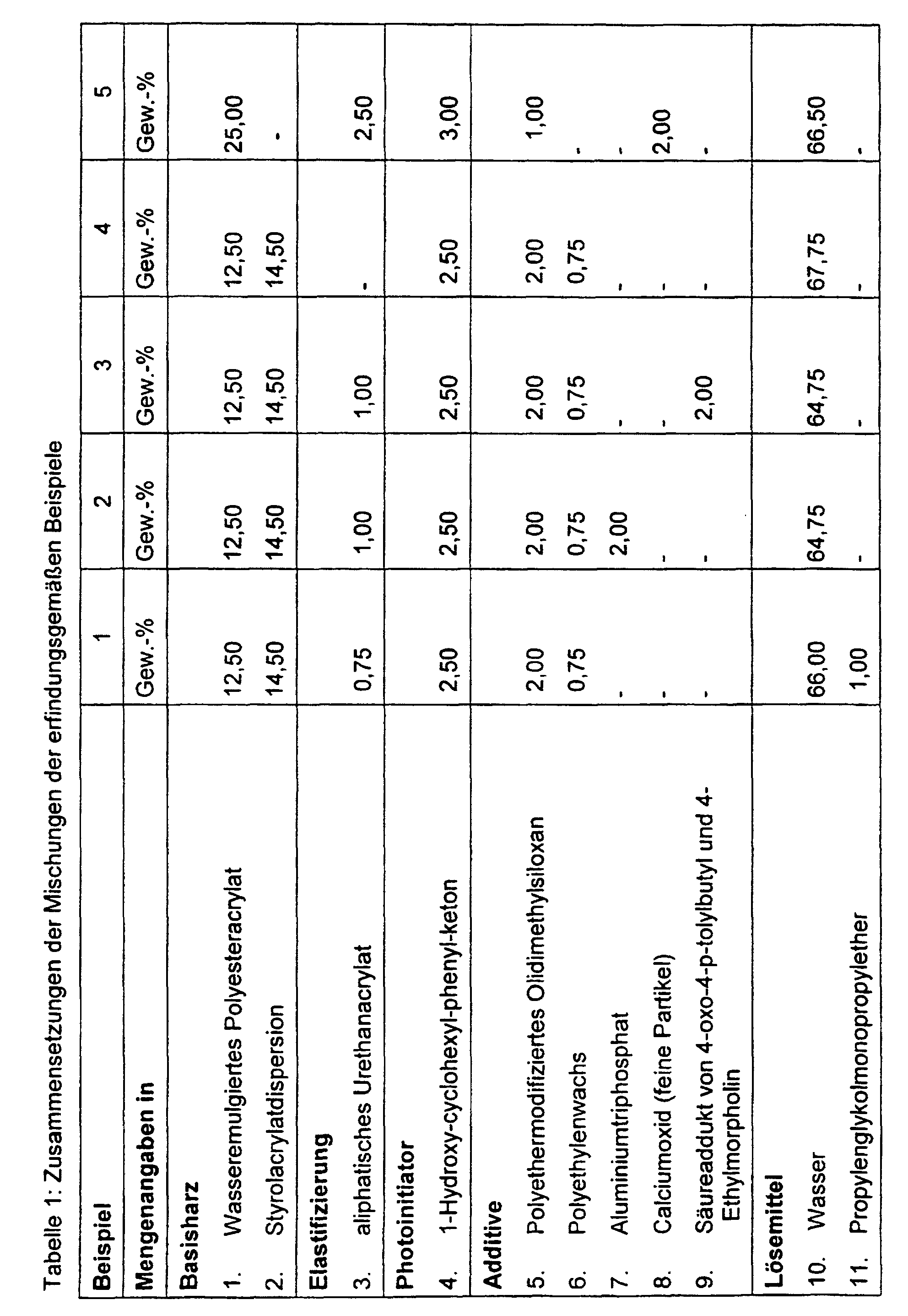

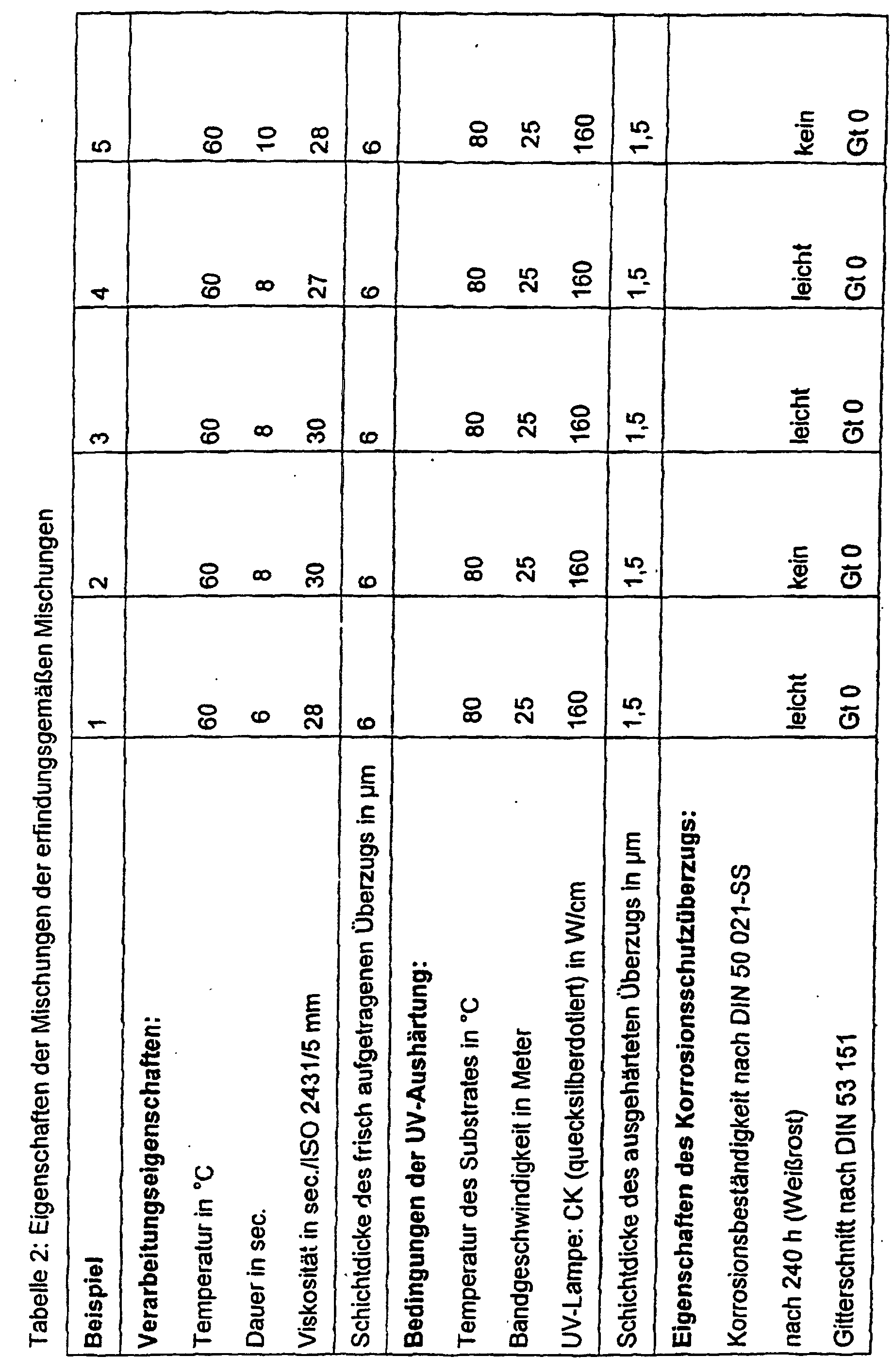

## Patentansprüche

1. Verfahren zur Beschichtung von Blechen wie z.B. Coils mit einem chromatfreien, wasserverdünnbaren, organischen, UV-härtenden Korrosionsschutzüberzug und zur Aushärtung der Beschichtung durch Bestrahlung mit UV-Licht, **dadurch gekennzeichnet, dass** als UV-härtendes Überzugsmittel zur Ausbildung des Korrosionsschutzüberzuges eine Dispersion oder Emulsion eingesetzt wird, die im wesentlichen aus
| | |
|---|---|
| 25 bis 80 Gew.-% | Bindemittel, |
| 1 bis 8 Gew.-% | Photoinitiator(en), |
| 0 bis 5 Gew.-% | Additiv(en), |
| 20 bis 70 Gew.-% | Wasser |
| und mindestens einem Pigment | |
besteht,
wobei ein Gehalt an Pigment im Bereich von 0,1 bis 60 Gew.-% zugesetzt wird und
wobei der Gehalt an Pigment über die Summe aller anderen Bestandteile einer Mischung einschließlich Lösemittel = 100 Gew.-% hinaus berechnet wird, wobei die einzelnen zugesetzten Pigmente jeweils eine mittlere Partikelgröße im Bereich von 0,001 bis 10 µm aufweisen,
wobei mindestens ein Additiv zugesetzt wird ausgewählt aus Dimethylsiloxanen, Wachsen und Haftvermittlern wie z.B. Silanen,
wobei die wässerige Dispersion oder Emulsion ohne Zusatz von niedrigmolekularen Reaktivverdünnern hergestellt wird,
wobei das Überzugsmittel mit einer Naßfilmdicke im Bereich von 1 bis 40 µm auf das Blech aufgetragen wird, zu einem Film getrocknet und mittels UV-Licht gehärtet wird, so dass der Korrosionsschutzüberzug eine Trockenfilmdicke im Bereich von 0,1 bis 20 µm aufweist.

2. Verfahren nach Anspruch 1, **dadurch gekennzeichnet, dass** das Bindemittel als Basisharz Polyacrylat, ungesättigte Acrylatesterharze und/oder Urethanacrylharze enthält.

3. Verfahren nach einem der vorstehenden Ansprüche, **dadurch gekennzeichnet, dass** als Photoinitiator ein Benzoinether wie Benzoinisopropylether oder Benzildimethylketal, oder 1-Hydroxycyclohexylphenylketon, 2-Hydroxy-2-methyl-1-phenylpropan-1-on, Benzophenone oder auch 2,4,6-Trimethylbenzoyldiphenylphosphinoxid verwendet wird.

4. Verfahren nach einem der vorstehenden Ansprüche, **dadurch gekennzeichnet, dass** der Mischung als Additiv ein Elastifizierungsharz aus einem ungesättigten aliphatischen Urethanacrylat-Präpolymerisat zugefügt wird.

5. Verfahren nach einem der vorstehenden Ansprüche, **dadurch gekennzeichnet, dass** als Additiv ein Emulgator für das Bindemittel zugefügt wird.

6. Verfahren gemäß einem der vorstehenden Ansprüche, **dadurch gekennzeichnet, dass** der Korrosionsschutzüberzug eine Trockenfilmdicke im Bereich von 0,3 bis 12 µm, ganz besonders bevorzugt von 0,5 bis 8 µm, vor allem von 0,8 bis 6 µm aufweist.

7. Verfahren gemäß einem der vorstehenden Ansprüche, **dadurch gekennzeichnet, dass** die Trocknung des mit dem Überzugsmittel beschichteten Bleches bei Temperaturen im Bereich von 50 bis 100 °C erfolgt.

8. Verfahren nach einem der vorstehenden Ansprüche, **dadurch gekennzeichnet, dass** das UV-Licht mit Quecksilberdampflampen mit einer Strahlung im Bereich von 180 bis 500 nm, insbesondere im Bereich von 220 bis 350 nm, erzeugt wird.

9. Verfahren gemäß einem der vorstehenden Ansprüche, **dadurch gekennzeichnet, dass** das Blech mit dem ausgehärteten Korrosionsschutzüberzug umgeformt, geschnitten und/oder gestanzt sowie ggf. zusätzlich lackiert wird.

10. Verfahren gemäß einem der vorstehenden Ansprüche, **dadurch gekennzeichnet, dass** das umgeformte, geschnittene und/oder gestanzte Blech mit einem anderen Konstruktionselement durch Clinchen, Kleben, Schweißen und/oder mindestens ein weiteres Fügeverfahren verbunden ist.

11. Verwendung von Blechen mit UV-härtenden Korrosionsüberzügen hergestellt nach einem der vorstehenden Ansprüche in der Fahrzeugtechnik, Luft- oder Raumfahrtindustrie, insbesondere für eine Karosserie oder ein Teil einer Karosserie bzw. als Teil eines Fahrzeuges, Anhängers, Wohnmobils oder Flugkörpers, als Abdeckung, Gehäuse, Lampe, Leuchte, Ampelelement, Möbelstück oder Möbelelement, Element eines Haushaltsgeräts, Regalelemente, Fassadenelemente, Gestell, Profil, Formteil komplizierter Geometrie, Leitplanken-, Heizkörper- oder Zaunelement, Stoßstange, Fenster-, Tür- oder Fahrradrahmen.

## Claims

1. Method of coating metal sheets, such as, for example, coils, with a chromate-free, water-thinnable, organic UV-hardening corrosion-protection coating and of curing the coating by irradiation with UV light, **characterized in that**, as UV-hardening coating agent for forming the corrosion-protection coating, use is made of a dispersion or emulsion that is essentially composed of
| | |
|---|---|
| 25 to 80 wt.% | binders, |
| 1 to 8 wt.% | photoinitiator(s), |
| 0 to 5 wt.% | additive(s), |
| 20 to 70 wt.% | water |
| and, optionally, at least one pigment, | |
wherein a pigment content in the range of 0.1 to 60 wt.% is added and
wherein the pigment content is calculated in addition to all the other constituents of a mixture, including solvent, = 100 wt.%, wherein the individual added pigments each have a mean particle size in the range of 0.001 to 10 µm,
wherein at least one additive is added that is selected from the group comprising dimethylsiloxanes, waxes and adhesion promoters, such as, for example, silanes,
wherein the aqueous dispersion or emulsion is prepared without adding low-molecular-weight reactive thinners,
wherein the coating agent is applied with a wet-film thickness in the range of 1 to 40 µm to the metal sheet, dried to a film and hardened by means of UV light so that the corrosion protection coating has a dry-film thickness in the range of 0.1 to 20 µm.

2. Method according to Claim 1, **characterized in that** the binder contains, as basic resin, polyacrylate, unsaturated acrylate ester resins and/or urethane acrylic resins.

3. Method according to either of the preceding claims, **characterized in that**, as photoinitiator, use is made of a benzoin ether, such as benzoin isopropyl ether or benzil dimethyl ketal, or 1-hydroxycyclohexyl phenyl ketone, 2-hydroxy-2-methyl-1-phenyl-1-propanone, benzophenones or also 2,4,6-trimethylbenzoyldiphenylphosphine oxide.

4. Method according to any one of the preceding claims, **characterized in that** an elasticizing resin composed of an unsaturated aliphatic urethane acrylate prepolymer is added to the mixture as an additive.

5. Method according to any one of the preceding claims, **characterized in that** an emulsifier for the binder is added as an additive.

6. Method according to any one of the preceding claims, **characterized in that** the corrosion-protection coating has a dry-film thickness in the range of 0.3 to 12 µm, particularly preferably of 0.5 to 8 µm, especially of 0.8 to 6 µm.

7. Method according to any one of the preceding claims, **characterized in that** the metal sheet coated with the coating agent is dried at temperatures in the range of 50 to 100°C.

8. Method according to any one of the preceding claims, **characterized in that** the UV light is generated with mercury vapour lamps radiating in the range of 180 to 500 nm, in particular in the range of 220 to 350 nm.

9. Method according to any one of the preceding claims, **characterized in that** the metal sheet with the cured corrosion-protection coating is worked, cut and/or punched and also, optionally, additionally painted.

10. Method according to any one of the preceding claims, **characterized in that** the worked, cut and/or punched metal sheet is joined to another structural element by clinching, bonding, welding and/or at least one further joining method.

11. Use of metal sheets having UV-hardening corrosion coatings produced by one of the preceding claims, in vehicle technology, the aero or space industry, in particular for a body or a part of a body or as part of a vehicle, trailer, caravan or aircraft body, as covering, housing, lamp, light fitting, traffic light component, piece of furniture or furniture component, component of a domestic appliance, shelving components, façade components, frame, section, moulding having a complicated geometry, crash barrier component, radiator component or fence component, bumper, window frame, door frame or bicycle frame.

## Revendications

1. Procédé pour revêtir des tôles comme par exemple des rubans, d'une couche de protection contre la corrosion, organique, exempte de chromate, diluable à l'eau et durcissant sous l'effet des rayons UV, et pour faire durcir le revêtement par irradiation avec des rayons UV, **caractérisé en ce qu'**on utilise comme agent de revêtement durcissant sous l'effet des rayons UV, pour la formation de la couche de protection contre la corrosion, une dispersion ou une émulsion qui est constituée essentiellement de 25 à 80 % en poids d'un liant, 1 à 8 % en poids d'un ou plusieurs photoamorceurs, 0 à 5 % en poids d'un ou plusieurs additifs, 20 à 70 % en poids d'eau, et au moins un pigment,
la proportion de pigment ajouté étant située dans le domaine allant de 0,1 à 60 % en poids et cette proportion de pigment calculée venant s'ajouter à la somme égale à 100 % en poids de tous les autres constituants d'un mélange y compris le solvant, et les différents pigments ajoutés présentant chacun une taille moyenne de particule située dans le domaine allant de 0,001 à 10 µm,
procédé dans lequel on ajoute au moins un additif choisi parmi des diméthylsiloxanes, des cires et des agents communiquant de l'adhérence comme par exemple les silanes, on prépare la dispersion ou émulsion aqueuse sans ajouter de diluant réactif de faible masse moléculaire, on applique sur la tôle l'agent de revêtement en un film humide ayant une épaisseur de 1 à 40 µm, on sèche le film humide pour obtenir un film et on le fait durcir au moyen de rayons UV, de façon à ce que la couche de protection contre la corrosion présente une épaisseur de film sec comprise dans l'intervalle allant de 0,1 à 20 µm.

2. Procédé selon la revendication 1, **caractérisé en ce que** le liant contient comme résine de base, un polyacrylate, des résines d'ester acrylique insaturées et/ou des résines uréthane-acryliques.

3. Procédé selon la revendication 1 ou 2, **caractérisé en ce qu'**on emploie comme photoamorceur, un éther de benzoïne comme l'éther isopropylique de benzoïne ou le benzyldiméthylcétal, la 1-hydroxycyclohexylphénylcétone, la 2-hydroxy-2-méthyl-1-phénylpropanone-1, la benzophénone ou encore l'oxyde de 2,4,6-triméthylbenzoyldiphénylphosphine.

4. Procédé selon l'une quelconque des revendications précédentes, **caractérisé en ce qu'**on ajoute comme additif au mélange une résine élastifiante constituée d'un prépolymérisat d'uréthane-acrylate, aliphatique insaturé.

5. Procédé selon l'une quelconque des revendications précédentes, **caractérisé en ce qu'**on ajoute comme additif, un émulsifiant pour le liant.

6. Procédé selon l'une quelconque des revendications précédentes, **caractérisé en ce que** la couche de protection contre la corrosion présente une épaisseur de film sec de 0,3 à 12 µm, de préférence de 0,5 à 8 µm, et en particulier de 0,8 à 6 µm.

7. Procédé selon l'une quelconque des revendications précédentes, **caractérisé en ce qu'**on effectue le séchage de la tôle revêtue de l'agent de revêtement à des températures comprises dans le domaine allant de 50 à 100 °C.

8. Procédé selon l'une quelconque des revendications précédentes, **caractérisé en ce que** l'on produit les rayons UV avec des lampes à vapeur de mercure produisant des rayons ayant une longueur d'onde comprise dans le domaine allant de 180 à 500 nm, en particulier dans le domaine allant de 220 à 350 nm.

9. Procédé selon l'une quelconque des revendications précédentes, **caractérisé en ce que** la tôle portant le revêtement de protection contre la corrosion, durci, est façonnée, découpée et/ou estampée, et éventuellement en plus laquée.

10. Procédé selon l'une quelconque des revendications précédentes, **caractérisé en ce que** la tôle façonnée, découpée et/ou estampée est reliée à un autre élément de construction par rivetage, collage, soudage et/ou au moins un autre procédé d'assemblage.

11. Utilisation de tôles portant un revêtement contre la corrosion, durcissant sous l'effet des rayons UV, préparées par le procédé selon l'une quelconque des revendications précédentes, dans la construction automobile, l'aéronautique ou l'astronautique, en particulier pour une carrosserie ou une partie d'une carrosserie, ou comme partie d'un véhicule, d'une remorque, d'une caravane ou d'un engin volant, comme couvercle, boîtier, lampe, luminaire, élément de lampe à suspension, pièce ou élément de mobilier, élément d'un appareil ménager, éléments d'étagère, éléments de façade, châssis, profilé, pièce façonnée de géométrie compliquée, élément de glissière de sécurité, de radiateur ou de clôture, pare-chocs, cadre de fenêtre, de porte ou de vélo.
